# EUROPÄISCHE PATENTANMELDUNG

(11) **EP 4 685 917 A1**
(43) Veröffentlichungstag der Anmeldung: **28.01.2026**
(21) Anmeldenummer: 24190340.0
(22) Anmeldetag: 23.07.2024
(51) Int. Cl.: H01M 10/42, H01M 10/44, H01M 10/48, G01N 29/04, G01R 31/382

(54) **VERFAHREN ZUM ÜBERWACHEN EINES FORMIERUNGSPROZESSES EINER BATTERIEZELLE MITTELS EINER FORMIERUNGSVORRICHTUNG, COMPUTERPROGRAMMPRODUKT, COMPUTERLESBARES SPEICHERMEDIUM SOWIE FORMIERUNGSVORRICHTUNG**

(71) Anmelder: Siemens Aktiengesellschaft, 80333 München (DE)
(72) Erfinder: Fischer, Michael, 91320 Ebermannstadt (DE); Radinger, Hannes, 86152 Augsburg (DE)
(74) Vertreter: Siemens Patent Attorneys

(57) **Zusammenfassung**

Die Erfindung betrifft ein Verfahren zum Überwachen eines Formierungsprozesses (14) einer Batteriezelle (12) mittels einer Formierungsvorrichtung (10), mit den Schritten: Laden der Batteriezelle (12) mit zumindest einem ersten Formierungsstrom (22) mittels einer Ladeeinrichtung (16) der Formierungsvorrichtung (10); Erfassen eines akustischen Ist-Signals (30) der Batteriezelle (12) während des Formierungsprozesses (14) mittels einer akustischen Erfassungseinrichtung (18) der Formierungsvorrichtung (10); und Überwachen des Formierungsprozesses (14) durch Vergleichen des akustischen Ist-Signals (30) mit einem vorgegebenen akustischen Soll-Signal (32) mittels einer elektronischen Recheneinrichtung (20) der Formierungsvorrichtung (10). Ferner betrifft die Erfindung ein Computerprogrammprodukt, ein computerlesbares Speichermedium sowie eine Formierungsvorrichtung (10).

## Beschreibung

Die nachfolgende Erfindung betrifft ein Verfahren zum Überwachen eines Formierungsprozesses einer Batteriezelle mittels einer Formierungsvorrichtung gemäß dem geltenden Patentanspruch 1. Ferner betrifft die Erfindung ein entsprechendes Computerprogrammprodukt, ein entsprechendes computerlesbares Speichermedium sowie eine Formierungsvorrichtung.

Die Formierung einer Batteriezelle ist einer der letzten Produktionsschritte in der Zellproduktion und findet nach der Elektrolyt-Befüllung und dem Verschließen statt. Der Formierungsprozess umfasst die erste Lade- beziehungsweise Entladevorgänge der assemblierten Batteriezelle und soll einen definierten und für die spätere Verwendung optimierten Ausgangszustand gewährleisten. Bei Lithium-Ionen-Batterien und verwandten Technologien ist die Bildung einer wohl definierten Solid Electrolyte Interface (SEI) an der Oberfläche der negativen Elektrode zentral. Diese wächst durch Reaktionen elektrolytischer Bestandteile an der Elektrode in bestimmten Spannungsbereichen unter kontrollierten Lade-/Entladezyklen der Batteriezelle.

Dabei sind zwei technische Einschränkungen zu beachten. In einer Batteriezelle treten mehrere komplexe Reaktionen simultan auf, die sich in der Kinetik voneinander unterscheiden. Eine elektrochemische Reaktion einschließlich der SEI-Formierung, findet abhängig vom Grenzflächenpotential lokal statt. Falls der zeitliche Verlauf der vorgegebenen Stromstärke beziehungsweise der angelegten Spannung nicht gut gewählt wird, können sich Potentiale an der Grenzfläche einstellen, die für die Bildung der optimalen SEI nicht geeignet sind. Des Weiteren ist die Formierung eine der zeit- und energieintensivsten Prozesse in der Zellproduktion, so dass die Prozessverläufe effizient gehalten werden müssen, um insbesondere Zeit und Kosten sparen zu können. Diese beiden Anforderungen stellen dabei hohe Ansprüche an die Definition und Kontrolle der Prozessparameter während der Formierung.

Aus dem Stand der Technik ist bereits bekannt, dass die meisten Formierungsprozesse Stromstärken und gegebenenfalls Spannungs- und Temperaturverläufe basierend auf empirischen Tests wählen. Dabei werden die Prozessparameter so gewählt, dass sie einen möglichst guten Kompromiss aus Performance und Prozesskosten darstellen. Falls Messungen zur Kontrolle des Formierungsprozesses verwendet werden, beschränken sich diese meist auf Strom- und Spannungsmessungen. Es kann beispielsweise so lange zyklisiert werden, bis die gemessene differentielle Kapazität unter einen bestimmten Schwellwert fällt. Dieses Vorgehen benötigt einerseits eine möglichst genaue Kenntnis der verfügbaren Prozessfenster und kann andererseits Streuungen in der Qualität der produzierten Batteriezellen nicht vollständig berücksichtigen.

Aufgabe der vorliegenden Erfindung ist es, ein Verfahren, ein Computerprogrammprodukt, ein computerlesbares Speichermedium sowie eine Formierungsvorrichtung zu schaffen, mittels welchen verbessert ein Formierungsprozess einer Batteriezelle überwacht werden kann.

Diese Aufgabe wird durch ein Verfahren, ein Computerprogrammprodukt, ein computerlesbares Speichermedium sowie eine Formierungsvorrichtung gemäß den unabhängigen Patentansprüchen gelöst. Vorteilhafte Ausgestaltungsformen sind in den Unteransprüchen angegeben.

Ein Aspekt der Erfindung betrifft ein Verfahren zum Überwachen eines Formierungsprozesses einer Batteriezelle mittels einer Formierungsvorrichtung. Die Batteriezelle wird mit zumindest einem ersten Formierungsstrom mittels einer Ladeeinrichtung der Formierungsvorrichtung geladen. Es erfolgt das Erfassen eines akustischen Ist-Signals der Batteriezelle während des Formierungsprozesses mittels einer akustischen Erfassungseinrichtung der Formierungsvorrichtung. Der Formierungsprozess wird durch Vergleichen des akustischen Ist-Signals mit einem vorgegebenen akustischen Soll-Signal mittels einer elektronischen Recheneinrichtung der Formierungsvorrichtung überwacht.

Somit ist es ermöglicht, dass während des Formierungsprozesses zumindest in vorgegebenen Zeitabständen eine Überwachung des Formierungsprozesses durchgeführt werden kann. Insbesondere auf Basis von einem akustischen Signal während des Formierungsprozesses, ausgehend von der Batteriezelle, kann somit ein Vergleich stattfinden, ob der Formierungsprozess den gewünschten Parametern entspricht. Somit kann der Formierungsprozess entsprechend überwacht werden und es können beispielsweise auch Gegenmaßnahmen ergriffen werden, sollte der Formierungsprozess nicht den gewünschten Parametern entsprechen.

Insbesondere macht sich somit die Erfindung zunutze, dass die Veränderungen innerhalb der Materialien, wie zum Beispiel Deformation, Rissbildung oder Scherung, mechanische Wellen verursachen. Die dadurch hervorgerufenen, akustischen Signale können mittels der akustischen Erfassungseinrichtung in elektrische Signale umgewandelt werden, von einer Erfassungseinrichtung aufgefangen werden und von der elektronischen Recheneinrichtung analysiert werden. Akustische Signale werden auch durch Filmwachstum erzeugt, wie es bei der SEI-Bildung (SEI - Festelektrolyt-Interphase) auftritt. Akustische Signale als Folge der SEI-Formierung werden beispielsweise durch Gasbildung oder Lithium-Interkallation verursacht.

Die Analyse des Ist-Signals kann dabei wertvolle Informationen zu den Prozessen innerhalb der Batteriezelle liefern. Zentraler Bestandteil der Überwachung ist dabei eine Datenbank mit den Ergebnissen vorangegangener Formierungen, auf die im laufenden Prozess zurückgegriffen werden kann. Hierbei kann beispielsweise eine Kennlinie einer so genannten Golden Sample genutzt werden, also einer Batteriezelle, die in der Qualitätsbewertung genau die Anforderungen erfüllt, die der Produzent beziehungsweise ein Kunde des Produzenten an die Batteriezelle hat.

Insbesondere kann somit der Formierungsprozess für jede individuelle Batteriezelle optimiert werden. Da die Formierung mittels Strompulsen erfolgt und nicht über ein kontinuierliches Profil, kann zellindividuell und intelligent formiert werden. So werden beispielsweise auch elektrische Kenngrößen wie Ruhe- und Überspannungen der Batteriezelle zugänglich. Das SEI-Wachstum wird dadurch regelbar. Des Weiteren wird die Formierung gesteuert durch direkte Materialsignale innerhalb der Batteriezelle, nicht nur durch eine komplexe Analyse von elektrischen Kennwerten. Des Weiteren kann der Prozess durch höhere Ströme und längere Pulse beschleunigt werden, wenn die zu formierende Batteriezelle dadurch das gewünschte Profil der "Golden Sample" erreicht. Ferner kann im Gegensatz dazu die Formierung verlangsamt werden, wenn der Prozess die Bildung der gewünschten SEI gefährden würde. Dadurch ergibt sich für den Batterieproduzenten eine geringere Ausschlussrate durch unzureichende Formierung.

Bekannte Verfahren zur Messung von Überspannungen beziehungsweise Zellwiderständen während der Formierung sind mit der hier vorgestellten Regelung des Formierungsprozesses ebenfalls kombinierbar. Dadurch ergeben sich weitere Verbesserungen der Regelung des SEI-Verfahrens.

Gemäß einer vorteilhaften Ausgestaltungsform wird in Abhängigkeit von der Überwachung eine Bewertung des Formierungsprozesses durchgeführt. Insbesondere kann somit durch den Vergleich das Ist-Signal mit dem Soll-Signal ausgewertet und die Bewertung durchgeführt werden. Sollten beispielsweise in Abhängigkeit von entsprechenden Schwellwerten, der Vergleich des Ist-Signals im Wesentlichen denen des Soll-Signals entsprechen, so kann eine Bewertung derart erfolgen, dass der Formierungsprozess in Ordnung ist. Sollten entsprechende Abweichungen beim Vergleich auftreten, so kann bestimmt werden, dass eine Qualität des Formierungsprozesses an dieser Stelle nicht ausreichend ist, und beispielsweise entsprechende Gegenmaßnahmen einzuleiten sind.

In einer weiteren vorteilhaften Ausgestaltungsform ist vorgesehen, dass als das akustische Soll-Signal ein akustisches Signal einer Referenzbatteriezelle beim Formierungsprozess vorgegeben wird. Beispielsweise kann das akustische Signal der Referenzbatteriezelle als so genannte "Golden-Sample" bezeichnet werden. Mit anderen Worten ist vorgesehen, dass beim Formierungsprozess einer Referenzbatteriezelle, welche insbesondere den entsprechenden Qualitätsmerkmalen entspricht, dieses Signal aufgezeichnet wird. Es wird dann entsprechend vorgegeben und das Ist-Signal wird mit dem Soll-Signal der Batteriezelle entsprechend referenziert. Somit ist es ermöglicht, dass zuverlässig das Soll-Signal vorgegeben werden kann.

Weiterhin vorteilhaft ist, wenn durch eine Amplitudenbewertung des akustischen Ist-Signals die Überwachung durchgeführt wird. Insbesondere kann somit die Amplitude im akustischen Ist-Signal entsprechend bewertet werden. Beispielsweise kann eine Amplitudenhöhe oder eine Häufigkeit des Auftretens einer Amplitude entsprechend genutzt werden. Somit kann auf einfache Art und Weise der Vergleich durchgeführt werden.

Weiterhin vorteilhaft ist, wenn eine Bewertung einer Amplitudenhöhe des akustischen Ist-Signals durchgeführt wird. Beispielsweise kann hierzu ein Schwellwert vorgesehen sein, welcher eine Bewertung erlaubt. Sollte ein akustisches Signal entsprechend oberhalb dieses Schwellwerts liegen, so wird dieses für die Bewertung in Betracht gezogen. Insbesondere hat dies den Hintergrund darin, dass Hintergrundrauschen im Ist-Signal entsprechend unberücksichtigt bleibt und lediglich akustische Signale, welche auf den Formierungsprozess zurückzuführen sind, ausgewertet werden.

Es hat sich weiterhin als vorteilhaft erwiesen, wenn eine Bewertung einer Häufigkeit einer auftretenden Amplitude im akustischen Ist-Signal durchgeführt wird. Insbesondere kann sozusagen auch die Häufigkeit von auftretenden Amplituden näher bestimmt werden. Mit anderen Worten kann beispielsweise vorgesehen sein, dass in einem vorgegebenen Zeitfenster eine Anzahl von auftretenden Amplituden gezählt wird. Dies kann auch als so genannte "Counts" bezeichnet werden. Dies lässt sich insbesondere auch mit dem Referenzspektrum, insbesondere dem Soll-Spektrum entsprechend vergleichen, wodurch auf den Formierungsprozess rückgeschlossen werden kann.

Es hat sich weiter als vorteilhaft erwiesen, wenn die Häufigkeit der auftretenden Amplitude in einem vorgegebenen Zeitfenster bewertet wird. Beispielsweise kann das Zeitfenster alle 5 Minuten beziehungsweise durch Auswertung von auftretenden Amplituden im Soll-Signal bereitgestellt werden. Beispielsweise sollte sich beim Soll-Signal zu gewissen Zeitpunkten eine Häufung von akustischen Signalen ereignen, so kann dies als Zeitfenster genutzt werden, um auch in der entsprechenden spezifischen Batteriezelle in diesem Zeitfenster nach den entsprechenden auftretenden Amplituden zu suchen. Somit ist es ermöglicht, dass zuverlässig die Überwachung durchgeführt werden kann.

Eine weitere vorteilhafte Ausgestaltungsform sieht vor, dass zum Vergleichen des Ist-Signals mit dem Soll-Signal ein aktuelles Ladepotential der Batteriezelle berücksichtigt wird. Insbesondere beim spezifischen Formierungsprozess können die entsprechenden Ladepotentiale zwischen einzelnen Batteriezellen variieren. Der Vergleich kann somit insbesondere dann durchgeführt werden, wenn die spezifische Batteriezelle beispielsweise den gleichen Ladezustand mit gleichem Ladepotential hat wie die Referenzbatteriezelle. Somit kann ein verbesserter Vergleich zeitunabhängig durchgeführt werden, so dass eine Überwachung entsprechend realisiert werden kann.

In einer weiteren vorteilhaften Ausgestaltungsform ist vorgesehen, dass das Laden auf Basis von Strompulsen und Ladepausen durchgeführt wird und eine Überwachung des Formierungsprozesses während der Strompulse und/oder während der Ladepausen durchgeführt wird. Der Formierungsprozess kann insbesondere somit sowohl mit entsprechend Strompulsen als auch mit Ladepausen beziehungsweise Ruhepausen zum Relaxieren der Batteriezelle versehen sein. Es kann nun vorgesehen sein, dass die Überwachung bei entsprechend gesetzten Strompulsen beziehungsweise auch während der Ladepausen durchgeführt werden kann. Somit können unterschiedliche Referenzen herangezogen werden, um eine zuverlässige Überwachung realisieren zu können.

Ebenfalls vorteilhaft ist, wenn in Abhängigkeit von der Überwachung zumindest ein zweiter Formierungsstrom für den Ladeprozess adaptiert wird. Somit kann während des Formierungsprozesses die Überwachung entsprechend dazu führen, dass Gegenmaßnahmen eingeleitet werden, sollte beim Vergleich herauskommen, dass das Ist-Signal im Wesentlichen nicht dem Soll-Signal entspricht. Damit kann der Formierungsprozess entsprechend geregelt beziehungsweise gesteuert werden, so dass auf Basis der Regelung die spezifische Batteriezelle der Referenzbatteriezelle angeglichen werden kann, indem entsprechende Parameter während des Formierungsprozesses adaptiert werden.

Dabei hat sich weiterhin als vorteilhaft erwiesen, wenn eine Dauer des zweiten Formierungsstroms und/oder eine Höhe des zweiten Formierungsstroms adaptiert wird. Insbesondere kann beispielsweise bei einem entsprechenden Strompuls die Höhe des Stroms adaptiert werden beziehungsweise auch die Zeit und/oder Dauer, in welcher der Strompuls entsprechend anliegt. Somit ist es ermöglicht, dass spezifisch auf den zellspezifischen Formierungsprozess eingegangen werden kann, so dass die Qualität der Batteriezelle erhöht werden kann. Es ist selbstverständlich, dass auch weitere Formierungsströme je nach Überwachung und Dauer des entsprechenden Formierungsprozesses angelegt werden können. Beispielsweise kann minütlich oder stündlich oder auch in weiteren Zeitabständen eine Überwachung durchgeführt werden und eine Adaption des Formierungsstroms durchgeführt werden.

Es hat sich weiterhin als vorteilhaft erwiesen, wenn mittels einer als Piezoelement ausgebildeten akustischen Erfassungseinrichtung das akustische Ist-Signal erfasst wird. Insbesondere kann mittels des Piezoelements das akustische Signal in ein elektrisches Signal umgewandelt werden, so dass dies der elektronischen Recheneinrichtung zugeführt werden kann, wobei auf Basis dessen dann wiederum eine Auswertung durchgeführt werden kann. Somit kann auf einfache Art und Weise die Überwachung durchgeführt werden.

Bei dem vorgestellten Verfahren handelt es sich im Wesentlichen um ein computerimplementiertes Verfahren. Daher betrifft ein weiterer Aspekt der Erfindung ein Computerprogrammprodukt mit Programmcodemitteln, welche eine elektronische Recheneinrichtung dazu veranlassen, wenn die Programmcodemittel von der elektronischen Recheneinrichtung abgearbeitet werden, ein Verfahren nach dem vorhergehenden Aspekt durchzuführen.

Weiterhin betrifft die Erfindung auch ein computerlesbares Speichermedium mit zumindest einem Computerprogrammprodukt nach dem vorhergehenden Aspekt.

Ein nochmals weiterer Aspekt der Erfindung betrifft eine Formierungsvorrichtung zur Überwachung eines Formierungsprozesses einer Batteriezelle mit zumindest einer Ladeeinrichtung, einer akustischen Erfassungseinrichtung und einer elektronischen Recheneinrichtung, wobei die Formierungsvorrichtung zum Durchführen eines Verfahrens nach dem vorhergehenden Aspekt ausgebildet ist. Insbesondere wird das Verfahren mittels der Formierungsvorrichtung durchgeführt.

Vorteilhafte Ausgestaltungsformen des Verfahrens sind als vorteilhafte Ausgestaltungsformen des Computerprogrammprodukts, des computerlesbaren Speichermediums sowie der Formierungsvorrichtung anzusehen. Die Formierungsvorrichtung weist hierzu gegenständliche Merkmale auf, um entsprechende Verfahrensschritte durchführen zu können.

Unter einer Recheneinheit/elektronische Recheneinrichtung kann insbesondere ein Datenverarbeitungsgerät verstanden werden, das einen Verarbeitungsschaltkreis enthält. Die Recheneinheit kann also insbesondere Daten zur Durchführung von Rechenoperationen verarbeiten. Darunter fallen gegebenenfalls auch Operationen, um indizierte Zugriffe auf eine Datenstruktur, beispielsweise eine Umsetzungstabelle, LUT (englisch: "look-up table"), durchzuführen.

Die Recheneinheit kann insbesondere einen oder mehrere Computer, einen oder mehrere Mikrocontroller und/oder einen oder mehrere integrierte Schaltkreise enthalten, beispielsweise eine oder mehrere anwendungsspezifische integrierte Schaltungen, ASIC (englisch: "application-specific integrated circuit"), eines oder mehrere feldprogrammierbare Gate-Arrays, FPGA, und/oder eines oder mehrere Einchipsysteme, SoC (englisch: "system on a chip"). Die Recheneinheit kann auch einen oder mehrere Prozessoren, beispielsweise einen oder mehrere Mikroprozessoren, eine oder mehrere zentrale Prozessoreinheiten, CPU (englisch: "central processing unit"), eine oder mehrere Grafikprozessoreinheiten, GPU (englisch: "graphics processing unit") und/oder einen oder mehrere Signalprozessoren, insbesondere einen oder mehrere Digitalsignalprozessoren, DSP, enthalten. Die Recheneinheit kann auch einen physischen oder einen virtuellen Verbund von Computern oder sonstigen der genannten Einheiten beinhalten.

In verschiedenen Ausführungsbeispielen beinhaltet die Recheneinheit eine oder mehrere Hardware- und/oder Softwareschnittstellen und/oder eine oder mehrere Speichereinheiten.

Eine Speichereinheit kann als flüchtiger Datenspeicher, beispielsweise als dynamischer Speicher mit wahlfreiem Zugriff, DRAM (englisch: "dynamic random access memory") oder statischer Speicher mit wahlfreiem Zugriff, SRAM (englisch: "static random access memory"), oder als nicht-flüchtiger Datenspeicher, beispielsweise als Festwertspeicher, ROM (englisch: "read-only memory"), als programmierbarer Festwertspeicher, PROM (englisch: "programmable read-only memory"), als löschbarer programmierbarer Festwertspeicher, EPROM (englisch: "erasable programmable read-only memory"), als elektrisch löschbarer programmierbarer Festwertspeicher, EEPROM (englisch: "electrically erasable programmable read-only memory"), als Flash-Speicher oder Flash-EEPROM, als ferroelektrischer Speicher mit wahlfreiem Zugriff, FRAM (englisch: "ferroelectric random access memory"), als magnetoresistiver Speicher mit wahlfreiem Zugriff, MRAM (englisch: "magnetoresistive random access memory") oder als Phasenänderungsspeicher mit wahlfreiem Zugriff, PCRAM (englisch: "phase-change random access memory"), ausgestaltet sein.

Hier und im Folgenden kann ein künstliches neuronales Netzwerk als Softwarecode verstanden werden, der auf einem computerlesbaren Speichermedium gespeichert ist und eines oder mehrere vernetzte künstliche Neuronen repräsentiert beziehungsweise deren Funktion nachbilden kann. Der Softwarecode kann dabei auch mehrere Softwarecodekomponenten beinhalten, die beispielsweise unterschiedliche Funktionen haben können. Insbesondere kann ein künstliches neuronales Netzwerk ein nichtlineares Modell oder einen nichtlinearen Algorithmus implementieren, das beziehungsweise der eine Eingabe auf eine Ausgabe abbildet, wobei die Eingabe durch einen Eingangsmerkmalsvektor oder eine Eingangssequenz gegeben ist und die Ausgabe beispielsweise eine ausgegebenen Kategorie für eine Klassifizierungsaufgabe, einen oder mehrere prädizierte Werte oder eine prädizierte Sequenz beinhalten kann.

Für Anwendungsfälle oder Anwendungssituationen, die sich bei einem erfindungsgemäßen Verfahren ergeben können und die hierin nicht explizit beschrieben sind, kann vorgesehen sein, dass gemäß dem Verfahren eine Fehlermeldung und/oder eine Aufforderung zur Eingabe einer Nutzerrückmeldung ausgegeben und/oder eine Standardeinstellung und/oder ein vorbestimmter Initialzustand eingestellt wird.

Unabhängig vom grammatikalischen Geschlecht eines bestimmten Begriffes sind Personen mit männlicher, weiblicher oder anderer Geschlechteridentität mit umfasst.

Weitere Merkmale und Merkmalskombinationen der Erfindung ergeben sich aus den Figuren und deren Beschreibungen sowie aus den Ansprüchen. Insbesondere müssen weitere Ausführungsformen der Erfindung nicht unbedingt alle Merkmale eines der Ansprüche enthalten. Weitere Ausführungsformen der Erfindungen können Merkmale oder Merkmalskombinationen aufweisen, die nicht in den Ansprüchen genannt sind.

Dabei zeigen:
- Fig. 1: ein schematisches Blockschaltbild gemäß einer Ausführungsform einer Formierungsvorrichtung;
- Fig. 2: ein schematisches Ablaufdiagramm gemäß einer Ausführungsform des Verfahrens; und
- Fig. 3: ein schematisches Zeit-Amplituden-Diagramm.

In den Figuren sind gleiche oder funktionsgleiche Elemente mit den gleichen Bezugszeichen versehen.

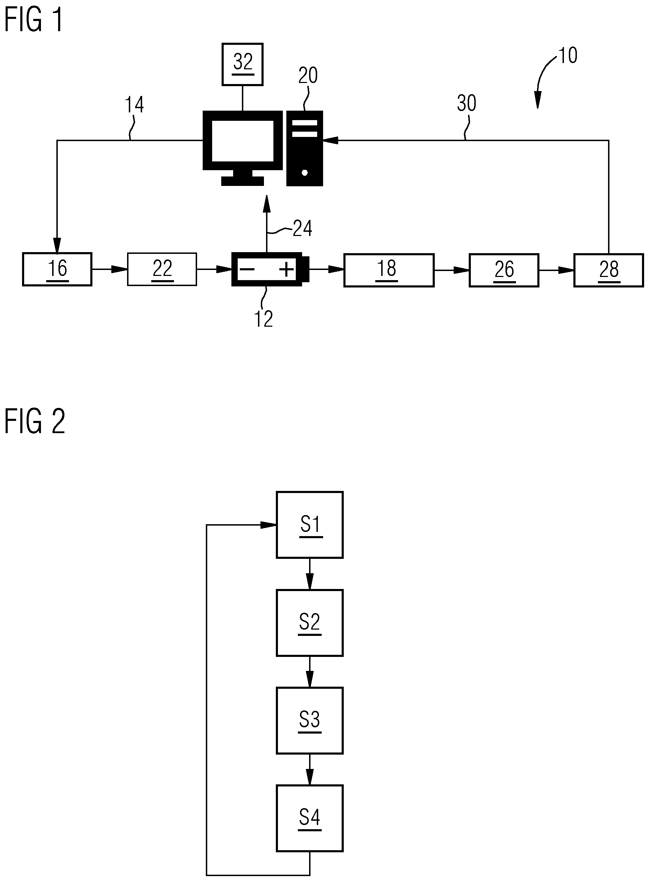

Fig. 1 zeigt ein schematisches Blockschaltbild gemäß einer Ausführungsform einer Formierungsvorrichtung 10 für eine Batteriezelle 12. Die Formierungsvorrichtung 10 ist insbesondere zum Überwachen eines Formierungsprozesses 14 ausgebildet. Des Weiteren ist die Formierungsvorrichtung 10 auch zum Durchführen des Formierungsprozesses 14 ausgebildet.

Die Formierungsvorrichtung 10 weist hierzu insbesondere eine Ladeeinrichtung 16, eine akustische Erfassungseinrichtung 18 sowie eine elektronische Recheneinrichtung 20 auf.

Gemäß Fig. 1 kann insbesondere durch die Ladeeinrichtung 16 ein Formierungsstrom 22, insbesondere in Form eines Strompulses auf die Batteriezelle 12 beaufschlagt werden. Es findet eine Strom-/Spannungsmessung 24 statt, welche ebenfalls an die elektronische Recheneinrichtung 20 übertragen wird. Des Weiteren kann vorgesehen sein, dass ein Verstärkerelement 26 sowie ein Detektorelement 28 vorgesehen sind, welche insbesondere ein akustisches Ist-Signal 30 der Batteriezelle 12 erfassen und verstärken können. Die elektronische Recheneinrichtung 20 weist wiederum ein entsprechendes akustisches Soll-Signal 32 auf, welches zum Vergleichen dient.

Fig. 2 zeigt ein schematisches Ablaufdiagramm gemäß einer Ausführungsform des Verfahrens. In einem ersten Schritt S1 wird die Batteriezelle 12 mit zumindest dem ersten Formierungsstrom 22 geladen. Es erfolgt in einem zweiten Schritt S2 das Erfassen des akustischen Ist-Signals 30 der Batteriezelle 12 während des Formierungsprozesses 14 mittels der akustischen Erfassungseinrichtung 18. In einem dritten Schritt S3 wird der Formierungsprozess 14 durch Vergleichen des akustischen Ist-Signals 30 mit dem vorgegebenen akustischen Soll-Signal 32 mittels der elektronischen Recheneinrichtung 20 überwacht. In einem potentiellen vierten Schritt S4 kann auf Basis des Vergleichs eine Bewertung des Formierungsprozesses 14 durchgeführt werden, und beispielsweise eine Adaption des Formierungsstroms 22 durchgeführt werden.

Dabei kann insbesondere vorgesehen sein, dass das als akustisches Soll-Signal 32 ein akustisches Signal einer Referenzbatteriezelle beim Formierungsprozess 14 vorgegeben wird. Weiterhin kann vorgesehen sein, dass zum Vergleichen des Ist-Signals 30 mit dem Soll-Signal 32 ein aktuelles Ladepotential der Batteriezelle 12 berücksichtigt wird. Des Weiteren kann vorgesehen sein, dass das Laden auf Basis von Strompulsen und Ladepausen durchgeführt wird und eine Überwachung des Formierungsprozesses 14 während der Strompulse und/oder während der Ladepausen durchgeführt wird. Des Weiteren kann vorgesehen sein, wie bereits erwähnt, dass in Abhängigkeit von der Überwachung zumindest ein zweiter Formierungsstrom für den Ladeprozess adaptiert wird. Des Weiteren kann auch eine Dauer des zweiten Formierungsstroms und/oder eine Höhe des zweiten Formierungsstroms adaptiert werden.

Ferner kann insbesondere vorgesehen sein, dass mittels einer als Piezoelement ausgebildeten akustischen Erfassungseinrichtung 18 das akustische Ist-Signal 30 erfasst wird.

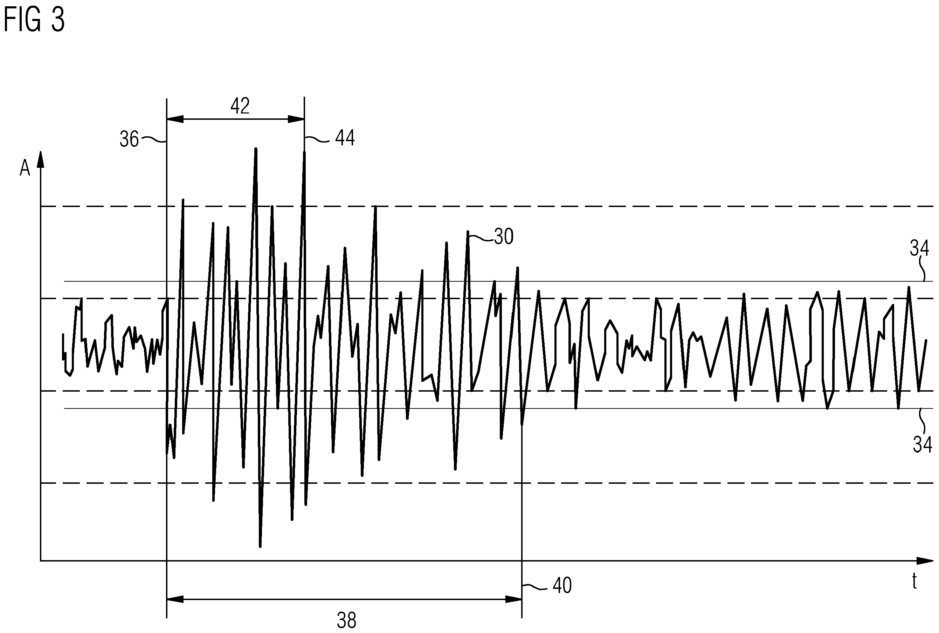

Fig. 3 zeigt ein Zeit-Amplituden-Diagramm. Insbesondere ist auf der Abszisse die Zeit t aufgetragen und auf der Ordinate die Amplitude A. Insbesondere zeigt die Fig. 3 somit ein erfasstes Ist-Signal 30. Dabei sind insbesondere entsprechende Schwellwerte 34 gezeigt. Des Weiteren zeigt die Fig. 3 insbesondere eine erste Amplitude 36 sowie eine maximale Amplitude 44, welche oberhalb des Schwellwerts 34 ist. Ferner ist eine Dauer 38 gezeigt, bei welcher die Amplituden entsprechend oberhalb des Schwellwerts 34 sind. Dabei ist ferner eine letzte Amplitude 40 gezeigt. Des Weiteren ist eine Anstiegszeit 42 gezeigt.

Insbesondere zeigt somit die Fig. 3, dass beispielsweise auf Basis einer Amplitudenbewertung des akustischen Ist-Signals 30 die Überwachung durchgeführt wird. Dabei kann insbesondere eine Bewertung einer Amplitudenhöhe des akustischen Ist-Signals 30 durchgeführt werden und/oder alternativ eine Bewertung einer Häufigkeit einer auftretenden Amplitude im akustischen Ist-Signal 30 bewertet werden. Ferner kann auch die Häufigkeit der auftretenden Amplitude in dem vorgegebenen Zeitfenster bewertet werden.

Insbesondere macht sich somit das vorgestellte Verfahren zunutze, dass die Veränderung innerhalb von Materialien wie zum Beispiel Deformation, Rissbildung oder Scherung mechanische Wellen verursachen. Die dadurch hervorgerufenen akustischen Ist-Signale 30 können mittels eines piezoelektrischen Sensors in elektrische Signale umgewandelt werden, von einem entsprechenden Detektorsystem aufgefangen und an die elektronische Recheneinrichtung 20 übermittelt und von dieser analysiert werden. Akustische Signale werden auch durch Filmwachstum erzeugt, wie es bei der SEI-Bildung (SEI - Solid Elektrolyte Interphase) auftritt. Akustische Signale als Folge der SEI-Formierung werden beispielsweise durch Gasbildung oder Lithium-Interkallation verursacht.

Die erzeugten Signale, wie in der Fig. 3 dargestellt, können auf vielfältige Weise analysiert werden. Ein Grenzwert, insbesondere der Schwellwert 34, wird vorab definiert, um tatsächliche Signale, ausgelöst durch elektrochemische Reaktionen, vom Hintergrundrauschen zu trennen. Besonders wertvolle Informationen bieten dann Werte wie beispielsweise die maximale Amplitude 44, Anschläge pro Zeiteinheit, insbesondere so genannte Counts, sowie die Dauer 38 des akustischen Ist-Signals 30. Zur Verarbeitung der Signale werden diese beispielsweise mittels eines Computerprogrammprodukts analysiert.

Die Regelung des Formierungsprozesses ist wiederum in der Fig. 1 entsprechend dargestellt und nutzt dabei insbesondere die elektronische Recheneinrichtung 20 zur Steuerung, um beispielsweise der Ladeeinrichtung 16, welche auch als Zyklisierer bezeichnet werden kann, die Stromstärke und Dauer eines Strompulses vorgibt, der auf die Batteriezelle 12 einwirkt. Durch die Energie des Pulses finden SEI-bildende Reaktionen an der Oberfläche der Elektrode statt. Diese Reaktionen erzeugen eine mechanische Welle, die über einen piezoelektrischen Sensor mit dem Verstärker 26 an dem Detektorelement 28 erkannt wird. Anschließend wird dieses Signal von der elektronischen Recheneinrichtung 20 ausgelesen.

Die Analyse des Ist-Signals 30 kann wertvolle Informationen zu den Prozessen innerhalb der Batteriezelle 12 liefern. Zentraler Bestandteil der Regelung ist insbesondere eine Datenbank mit den Ergebnissen vorangegangener Formierungen, auf die im laufenden Prozess zurückgegriffen werden kann. Ein wichtiger Bestandteil dieser Datenbank ist dabei die Kennlinie der so genannten Golden Sample, also der Referenzbatteriezelle, also einer Batteriezelle, die in der Qualitätsbewertung den Anforderungen entspricht, die beispielsweise der Produzent beziehungsweise Kunde an die Batteriezelle 12 hat.

Die Stromstärke des Pulses wird insbesondere über die Amplitude und die so genannten Counts des akustischen Ist-Signals 30 gesteuert. Ist die Intensität des Ist-Signals 30 wesentlich kleiner als bei der Golden Sample, so wird im nächsten Schritt ein Puls mit höherer Stromstärke in die Batteriezelle 12 gesendet. Vice versa wird bei zu hohen Amplituden die Stromstärke verringert, um die Reaktionen kontrollierbarer zu machen.

Die Pulsdauer korreliert mit der zeitlichen Dauer und den entsprechenden Counts der akustischen Messung. Laufen die Reaktionen in zu schneller Folge ab, kann die SEI-Bildung unkontrolliert voranschreiten. Die Reaktionsprodukte und Dicke der SEI werden somit schwieriger zu beeinflussen sein. Im Vergleich mit der Datenbank kann die Dauer des Strompulses folgend angepasst werden, um dem der Referenzbatteriezelle zu entsprechen.

Zur näheren Erläuterung der Erfindung wird die Regelung der Stromstärke über die Amplitude beispielhaft erläutert. Zum Start liegt beispielsweise eine messbare Ruhespannung von V₁ an der Batteriezelle 12 an. Nun wird ein Strompuls analog zum Golden Sample eingestellt. Die akustische Emission wird gemessen und mit dem akustischen Signal der akustischen Emission des Golden Samples bei der gleichen Ruhespannung Vi verglichen. Unterscheiden sich die Amplituden beider Signale, so wird die Stromstärke des folgenden Pulses, insbesondere bei einer Ruhespannung von V₂, angepasst. Unterscheidet sich die Signaldauer, so wird die Dauer des folgenden Pulses angepasst. Durch iterative Korrekturen bei den folgenden Strompulsen sollen sogleich akustische Emissionssignale wie bei der Golden Sample, insbesondere jeweils bei gleicher Ruhespannung, durch die Regelung gewährleistet werden. Dadurch kann erreicht werden, dass die SEI-Formierung analog zum Golden Sample abläuft.

### Bezugszeichenliste

- 10: Formierungsvorrichtung
- 12: Batteriezelle
- 14: Formierungsprozess
- 16: Formierungseinrichtung
- 18: akustische Erfassungseinrichtung
- 20: elektronische Recheneinrichtung
- 22: Formierungsstrom
- 24: Strom-/Spannungssignal
- 26: Verstärkerelement
- 28: Detektorelement
- 30: akustisches Ist-Signal
- 32: akustisches Soll-Signal
- 34: Schwellwert
- 36: erste Amplitude
- 38: Dauer
- 40: letzte Amplitude
- 42: Anstiegszeit
- 44: maximale Amplitude
- S1 bis S4: Schritte des Verfahrens

## Patentansprüche

1. Verfahren zum Überwachen eines Formierungsprozesses (14) einer Batteriezelle (12) mittels einer Formierungsvorrichtung (10), mit den Schritten:
- Laden der Batteriezelle (12) mit zumindest einem ersten Formierungsstrom (22) mittels einer Ladeeinrichtung (16) der Formierungsvorrichtung (10);
- Erfassen eines akustischen Ist-Signals (30) der Batteriezelle (12) während des Formierungsprozesses (14) mittels einer akustischen Erfassungseinrichtung (18) der Formierungsvorrichtung (10); und
- Überwachen des Formierungsprozesses (14) durch Vergleichen des akustischen Ist-Signals (30) mit einem vorgegebenen akustischen Soll-Signals (32) mittels einer elektronischen Recheneinrichtung (20) der Formierungsvorrichtung (10).

2. Verfahren nach Anspruch 1, **dadurch gekennzeichnet, dass**
in Abhängigkeit von der Überwachung eine Bewertung des Formierungsprozesses (14) durchgeführt wird.

3. Verfahren nach Anspruch 1 oder 2, **dadurch gekennzeichnet, dass** als das akustische Soll-Signal (32) ein akustisches Signal einer Referenzbatteriezelle beim Formierungsprozess (14) vorgegeben wird.

4. Verfahren nach einem der vorhergehenden Ansprüche, **dadurch gekennzeichnet, dass** durch eine Amplitudenbewertung des akustischen Ist-Signals (30) die Überwachung durchgeführt wird.

5. Verfahren nach Anspruch 4, **dadurch gekennzeichnet, dass**
eine Bewertung einer Amplitudenhöhe des akustischen Ist-Signals (30) durchgeführt wird.

6. Verfahren nach Anspruch 4 oder 5, **dadurch gekennzeichnet, dass**
eine Bewertung einer Häufigkeit einer auftretenden Amplitude im akustischen Ist-Signal (30) durchgeführt wird.

7. Verfahren nach Anspruch 6, **dadurch gekennzeichnet, dass**
die Häufigkeit der auftretenden Amplitude in einem vorgegeben Zeitfenster bewertet wird.

8. Verfahren nach einem der vorhergehenden Ansprüche, **dadurch gekennzeichnet, dass** zum Vergleichen des Ist-Signals (30) mit dem Soll-Signal (32) ein aktuelles Ladepotential der Batteriezelle (12) berücksichtigt wird.

9. Verfahren nach einem der vorhergehenden Ansprüche, **dadurch gekennzeichnet, dass** das Laden auf Basis von Strompulsen und Ladepausen durchgeführt wird und eine Überwachung des Formierungsprozesses (14) während der Strompulse und/oder während der Ladepausen durchgeführt wird.

10. Verfahren nach einem der vorhergehenden Ansprüche, **dadurch gekennzeichnet, dass** in Abhängigkeit von der Überwachung zumindest ein zweiter Formierungsstrom für den Ladeprozess adaptiert wird.

11. Verfahren nach Anspruch 10, **dadurch gekennzeichnet, dass**
eine Dauer des zweiten Formierungsstroms und/oder eine Höhe des zweiten Formierungsstroms adaptiert wird.

12. Verfahren nach einem der vorhergehenden Ansprüche, **dadurch gekennzeichnet, dass** mittels einer als Piezoelement ausgebildeten akustische Erfassungseinrichtung (18) das akustische Ist-Signal (30) erfasst wird.

13. Computerprogrammprodukt mit Programmcodemitteln, welche eine elektronische Recheneinrichtung (20) dazu veranlassen, wenn die Programmcodemittel von der elektronischen Recheneinrichtung (20) abgearbeitet werden, ein Verfahren nach einem der Ansprüche 1 bis 12 durchzuführen.

14. Computerlesbares Speichermedium mit zumindest einem Computerprogrammprodukt nach Anspruch 13.

15. Formierungsvorrichtung (10) zum Überwachen eines Formierungsprozesses (14) einer Batteriezelle (12), mit zumindest einer Ladeeinrichtung (16), einer akustischen Erfassungseinrichtung (18) und einer elektronischen Recheneinrichtung (20), wobei die Formierungsvorrichtung (10) zum Durchführen eines Verfahrens nach einem der Ansprüche 1 bis 12 ausgebildet ist.
